# EUROPÄISCHE PATENTSCHRIFT

(11) **EP 2 804 964 B1**
(45) Veröffentlichungstag und Bekanntmachung des Hinweises auf die Patenterteilung: **31.07.2019**
(21) Anmeldenummer: 13700361.2
(22) Anmeldetag: 17.01.2013
(51) Int. Cl.: C22B 9/04, C22B 26/22

(54) **VERFAHREN UND VORRICHTUNG ZUR VAKUUMDESTILLATION VON HOCHREINEM MAGNESIUM**
PROCESS AND APPARATUS FOR VACUUM DISTILLATION OF HIGH-PURITY MAGNESIUM
PROCÉDÉ ET DISPOSITIF DESTINÉS À LA DISTILLATION SOUS VIDE DE MAGNÉSIUM DE HAUTE PURETÉ.

(30) Priorität: 19.01.2012 EP 12000311
(43) Veröffentlichungstag der Anmeldung: 26.11.2014
(73) Patentinhaber: ETH Zuerich, 8092 Zuerich (CH)
(72) Erfinder: LÖFFLER, Jörg, 8606 Greifensee (CH); UGGOWITZER, Peter, CH-8913 Ottenbach / ZH (CH); WEGMANN, Christian, CH-8200 Schaffhausen / SH (CH); BECKER, Minh, CH-8049 Zürich / ZH (CH); FEICHTINGER, Heinrich, CH-8132 Hinteregg / ZH (CH)
(74) Vertreter: Galander, Marcus
(86) Internationale Anmeldenummer: PCT/EP2013/000131
(87) Internationale Veröffentlichungsnummer: WO 2013/107644

(56) Entgegenhaltungen:
- EP-A1- 1 335 030
- EP-A1- 1 335 032
- US-A- 5 698 158

## Beschreibung

Die Erfindung betrifft ein Verfahren zur Herstellung von hochreinem Magnesium über den Weg der Destillation unter vermindertem Druck sowie Vorrichtungen zur Durchführung des Verfahrens.

Magnesium hat einen im Vergleich mit den meisten anderen Metallen niedrigen Siedepunkt und dies ist der Grund, warum viele Verfahren zur Gewinnung des Rohmetalls oder auch zur Recyclierung von Magnesium aus Schrott über den Verfahrensschritt einer Vakuumdestillation führen, denn auf diese Weise kann in einem Schritt ein von weniger flüchtigen Metallen weitgehend gereinigtes Magnesium gewonnen werden. Will man auch diese flüchtigen Stoffe zur Erzeugung von hochreinem Magnesium entfernen, wie dies z.B. für die Halbleiterindustrie erwünscht ist, werden Vakuumdestillationsanlagen mit mehreren seriell angeordneten Kondensationsbereichen eingesetzt, sodass man unter mehreren mit anderen flüchtigen Metallen wie z.B. Zink und Cadmium stärker verunreinigten Fraktionen auch hochreine Fraktionen erhält, bei denen die Verunreinigungen nur noch im ppm-Bereich liegen. Ein solches Verfahren wird z.B. in EP 1 335 030 A1 beschrieben, wobei der aus einem Tiegel mit einer verunreinigter Magnesiumschmelze aufsteigende Dampf über eine Vielzahl aufeinanderfolgender und auf abnehmende Temperaturen erhitzte Abscheidungsbleche geleitet wird und sich in fraktionierter Form auf diesen Blechen abscheidet.

Die Verdampfungstemperatur von Magnesium kann bei Verminderung des Drucks bis unter die Temperatur des Schmelzpunkts abgesenkt werden und es ist eine Besonderheit dieses Metalls, dass sein Dampfdruck auch unterhalb des Schmelzpunkts noch so hoch liegt, dass er für eine technisch nutzbare Resublimation hochreiner Magnesiumkristalle ausreicht. Demgemäss führen die meisten bekannten Vakuumdestillationsverfahren entsprechend dem Stand der Technik zur Herstellung von hochreinem Magnesium zur Abscheidung von festen Magnesiumkristallen.

Solche Magnesiumkristalle sind zwar - in Anbetracht ihres niedrigen Gehalts an Fremdelementen - im chemischen Sinn als hochrein zu bezeichnen, jedoch besitzen die Kristalle ein hohes OberflächenNolums-Verhältnis und beim Umschmelzen solcher Kristalle zum Zwecke der Herstellung von Halbzeug oder endkonturnahen Körpern werden die aufgrund der hohen Reaktivität ursprünglich auf der Oberfläche der Magnesiumkristalle vorhandenen Oxidhäute in der Schmelze als nichtmetallische Einschlüsse verteilt und verbleiben im erstarrten Material. Obwohl sie nur geringe Konzentrationswerte aufweisen, können solche Einschlüsse jedoch z.B. das Korrosionsverhalten des sonst hochreinen Magnesiums in ungünstiger Weise beeinflussen.

Entsprechend EP 1335032 A1 gibt es ein Verfahren, bei dem eine verunreinigte Magnesiumschmelze in einem Verdampfergefäss aus hochreinem Graphit verdampft, wobei dieser Dampf sich anschliessend als flüssige Schmelze in einem ebenfalls aus Graphit bestehenden Kondensationstiegel niederschlägt. Beide Tiegel werden von einer Glocke aus Graphit umgeben, welche verhindert, dass der Magnesiumdampf mit der kalten Wand der die Glocke umgebenden Vakuumretorte in Kontakt kommt und dort kondensiert. Um sowohl den Verdampfungs- wie auch den Kondensationstiegel auf die für den Prozess nötigen Temperaturen zu bringen und gleichzeitig die Retorte kalt zu halten, befinden sich zwei Heizelemente im Zwischenraum zwischen der Retortenwand und der Graphitglocke. Insbesondere durch die Montage der Heizelemente innerhalb des Unterdruckbereichs sowie den Schutz der eigentlichen Verdampfungs- und Kondensationszone durch die Graphitglocke entsteht ein erhöhter konstruktionstechnischer Aufwand, zudem muss die Evakuierung des Innenvolumens durch Undichtigkeiten der Graphitglocke erfolgen, wodurch an diesen Stellen auch Magnesiumdampf nach aussen zu den Heizelementen und der kalten Retortenwand gelangen kann.

Im Gegensatz zu den meisten Verfahren entsprechend dem Stand der Technik erfolgt die Kondensation des hochreinen Magnesiums beim erfindungsgemässen Verfahren im flüssigen Zustand, wobei eine hochreine, von nichtmetallischen Einschlüssen freie Magnesiumschmelze resultiert, welche nach der Erstarrung einen kompakten Block bildet, der z.B. im Sinne von Halbzeug als Ausgangsmaterial für Umformungsprozesse geeignet ist, ohne dass das Material grössere Mengen an nichtmetallischen Einschlüssen enthält, welche einerseits die mechanischen Eigenschaften und andererseits das Korrosionsverhalten negativ beeinflussen können.

Insbesondere im Vergleich zum weiter oben zitierten Verfahren entsprechend EP 1335032 A1 besitzt das Verfahren den Vorteil, dass die Retorte von aussen beheizt werden kann, wobei der Magnesiumdampf ohne Probleme mit der Innenwand der Retorte in Kontakt kommen kann, da diese sich auf so hoher Temperatur befindet, dass es auf ihr nicht zur Abscheidung fester Magnesiumkristalle kommen kann. Desgleichen kann die Retortenwand auch aus einem Material bestehen, welches in geringem Masse in der Magnesiumschmelze löslich ist, wodurch die Magnesiumschmelze verunreinigt wird. Bedingung ist allerdings, dass die Retorte aus einem Material besteht, welches keine flüchtigen Verunreinigungen an den Magnesiumdampf abgibt.

Durch die Möglichkeit, die Beheizung ausserhalb der Retorte anzuordnen und auch den Kontakt mit der heissen, die Magnesiumschmelze geringfügig verschmutzenden Innenwand der Retorte zuzulassen, entsteht im Gegensatz zum Stand der Technik ein im Aufbau besonders einfaches und kostengünstiges Verfahren.

Das erfindungsgemässe Verfahren wird im folgenden anhand von drei Vorrichtungsbeispielen erläutert.
Bild 1 zeigt ein prinzipielles Schema einer erfindungsgemässen Vorrichtung mit den wesentlichen Erfindungsmerkmalen entsprechend der Lehre des unabhängigen Patentanspruchs.
Bild 2 zeigt einen Querschnitt durch eine beispielhafte Vorrichtung zur Herstellung von hochreinem Magnesium.
Bild 3 zeigt einen Querschnitt durch eine weitere beispielhafte Vorrichtung zur Herstellung von hochreinem Magnesium.

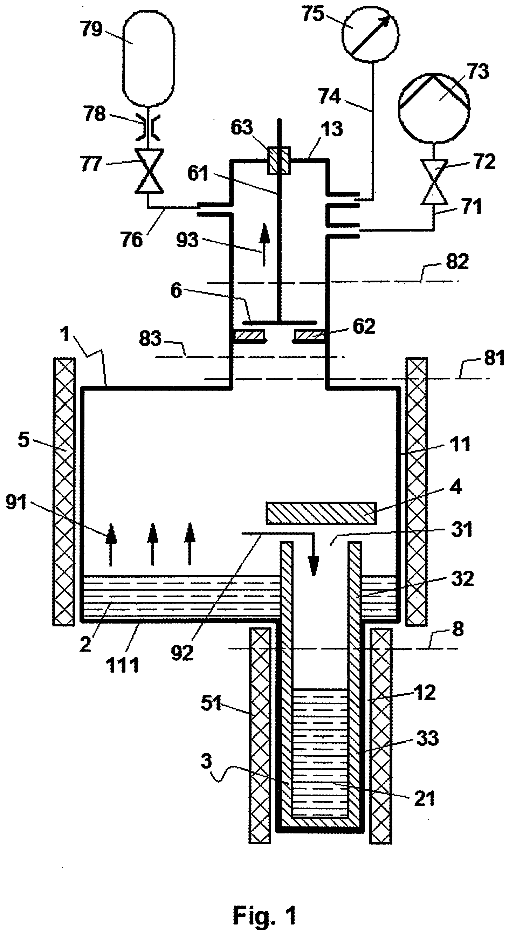

In Bild 1 sind die Elemente des ersten Vorrichtungsbeispiels bewusst in geometrisch einfacher Form zur Darstellung gebracht, um die Tatsache zu betonen, dass der zentrale Erfindungsgedanke weniger auf der spezifischen Form dieser Teile sondern auf der Funktionalität dieser Teile im Zusammenhang mit der Temperaturverteilung innerhalb der Retorte beruht. Das Ausgangsmaterial 2 in Form einer magnesiumhaltigen Metallschmelze befindet sich zusammen mit dem oberen Bereich 32 eines Kondensationsgefässes 3, vorzugsweise aus einem hochreinen Graphit, im oberen Bereich 11 einer z.B. aus rostfreiem Stahl hergestellten Retorte 1 mit beliebigem Querschnitt, wobei ein zylindrischer Querschnitt in der Praxis am günstigsten ist. Der obere Bereich 11 der Retorte wird durch ein sie umgebendes Heizelement 5, z.B. in Form eines Widerstandsofens, innerhalb der Grenzen der Niveaulinien 8 und 81 auf eine Temperatur oberhalb des Siedepunkts des Magnesiums gebracht und dann konstant gehalten, sodass aus der kochenden magnesiumhaltigen Metallschmelze 2 Dampf entsprechend der Pfeile 91 aufsteigt und den Innenraum des oberen Bereichs 11 der Retorte 1 erfüllt, wobei er oberhalb der Niveaulinie 81 auch flüssig kondensieren kann und dann wieder nach unten in die Schmelze 2 zurückfliesst. Da rostfreier Stahl in geringfügiger Weise mit flüssigem Magnesium reagiert, kommt es im Kontakt mit der Magnesiumschmelze zu ihrer Verunreinigung mit dessen Legierungselementen, da diese Elemente jedoch einen im Vergleich mit Magnesium ungleich niedrigeren Dampfdruck besitzen, macht sich diese Verunreinigung nicht im Dampf bemerkbar.

Um zu verhindern, dass aus dem Bereich oberhalb der Niveaulinie herabtropfende verunreinigte Schmelze in die Oeffnung 31 des Kondensationsgefässes 3 gelangt, ist diese durch eine wahlweise ebenfalls aus Graphit bestehende Abdeckung 4 geschützt, welche das unreine Magnesium wieder zurück in die Schmelze 2 leitet. Die Abdeckung 4 kann sich dabei direkt auf den oberen Bereich 32 des Kondensationsgefässes 3 abstützen oder auch seitlich oder oben mit der Innenwand der Retorte in Verbindung stehen. In jedem Fall muss die Befestigung jedoch so ausgeführt sein, dass die Abdeckung zur Entnahme des erstarrten hochreinen Magnesiums 21 aus dem Kondensationsgefäss 3 problemlos temporär entfernt werden kann.

Die Schmelze des magnesiumhaltigen Ausgangsmaterials 2 steht bei diesem Vorrichtungsbeispiel während des Destillationsprozesses direkt mit der Aussenfläche des Kondensationsgefässes 3 im Bereich 32 in Kontakt. Da bei Ende des Destillationsvorgangs praktisch sämtliches Ausgangsmaterial verdampft ist, ist das Kondensationsgefäss wieder frei. Etwa in den Spalt zwischen dem Bereich 31 des Kondensationsgefässes und dem Bereich 12 der Retorte eingedrungene Schmelze ist dabei ohne Belang, da das Kondensationsgefäss zur Herausnahme des erstarrten Magnesiums nicht unbedingt aus der Retorte entfernt werden muss. Der entsprechend Pfeil 92 in den oberen Bereich 32 des Graphittiegels eindringende Dampf kondensiert unterhalb der Niveaulinie 8 und sammelt sich als hochreine Schmelze 21 im unteren Bereich 33 des Graphittiegels. Um ein Kochen dieser hochreinen Schmelze 21 zu verhindern, kann innerhalb der Retorte durch ein Inertgas, z.B. Argon ein Mindestdruck beibehalten werden, welcher den Siedepunkt des Magnesium oberhalb der im Bereich 33 herrschenden Temperatur bringt. Dabei wird das Temperaturprofil insbesondere des unteren Teils 33 des Kondensationsgefässes 3 durch ein separat einstellbares Heizelement 51 bestimmt.

Ueber ein Sperrorgan 6, z.B. in Form eines Plattenventils, welches über eine von aussen betätigbare und durch eine Vakuumdurchführung 63 verschiebbare Schubstange 61 gegen einen Sitz 62, z.B. in Form einer Keramik- oder Graphitfilz-Packung gepresst wird, kann die Retorte 1 bei Bewegung der Schubstange 61 in Richtung des Pfeils 93 mit der Vorkammer 13 in Verbindung gebracht werden. Dabei befindet sich das Sperrorgan 6 mit der Ventilplatte und dem Sitz 62 im vorliegenden Beispiel zusammen mit dem oberen Bereich 11 der Retorte 1 oberhalb der Niveaulinie 81, d.h. bei einer Temperatur oberhalb des Schmelzpunkts von Magnesium, sodass es nicht zur Abscheidung von festem Magnesium im Bereich des Sperrorgans kommen kann, wodurch seine Funktion gewährleistet ist.

Die Vorkammer 13 besitzt in ihrem kälteren Bereich oberhalb der Niveaulinie 82, welche die Isotherme der Schmelztemperatur symbolisiert, einen Deckel 14, vorzugsweise in Gestalt eines entfernbaren Vakuumflansches, welcher neben der Vakuumdurchführung 63 mehrere Anschlüsse. Dabei führt ein Anschluss über eine Leitung 71 und ein Ventil 72 zu einer Vakuumpumpe 73, ein weiterer Anschluss über eine Leitung 74 zu einem Vakuummessgerät 75 und ein dritter Anschluss über eine Leitung 76, ein Ventil 77 und eine Druck- und oder Strömungsregulierung 78 zu einer Inertgasquelle 79, z.B. in Form einer Argondruckflasche.

Nachdem die Retorte 1 über die Vorkammer 13 evakuiert und anschliessend auf die für den Destillationsvorgang nötigen Temperaturen gebracht wurde, wird das Sperrorgan 6 nur noch kurzzeitig zum Zwecke der Druckeinstellung und der Druckkorrektur geöffnet, um eine übermässige Kondensation von Magnesiumdampf in der Vorkammer 13 zu vermeiden. Die Dauer der Schliessperioden hängt dabei vom Anstieg des Drucks in den Schliesszeiten ab. Im Idealfall, bei ausreichender Entgasung stärker gasabgebender, z.B. aus einem Graphit minderer Qualität bestehender Teile bzw. bei Verwendung von Teilen aus hochreinem Graphit, kann das Sperrorgan 6 langzeitig geschlossen bleiben und wird in langzeitigen Intervallen nur kurz zum Zweck der Drucküberwachung geöffnet. Falls der Druck in der Zwischenzeit über einen oberen Sollwert angestiegen ist, wodurch der Verdampfungsprozess des Ausgangsmaterials 2 beeinträchtigt wird, kann die Retorte 1 durch Oeffnung des Ventils 72 so lange mit der Vakuumpumpe 73 in Verbindung gesetzt werden, bis der Druck wieder in den Sollbereich abgesunken ist. Falls der Druck jedoch unter den Sollbereich abgesunken ist, wodurch die Gefahr der Verdampfung der im unteren Bereich 33 des Kondensationsgefässes 3 befindlichen hochreinen Magnesiumschmelze besteht, wird die Retorte 1 durch Oeffnung des Ventils 77 mit der Inertgasquelle 79 über die Strömungs- und/oder Druckregulierung 78 in Verbindung gesetzt, bis der Druck wieder in den Sollbereich angestiegen ist. In beiden Fällen wird das Sperrorgan 6 nach Erreichung des Solldruckbereichs sofort geschlossen, um übermässiges Eindringen von Magnesiumdampf in die Vorkammer 31 zu verhindern.

Sobald der Destillationsprozess entsprechend dem Vorrichtungsbeispiel von Bild 1 beendet und die Retorte 1 mit ihrem Inhalt auf Raumtemperatur abgekühlt ist, kann die Retorte z.B. durch einen Sägeschnitt entlang der gestrichelten Niveaulinie 83 geöffnet werden, worauf das im unteren Bereich 33 des Kondensationsgefässes 3 befindliche hochreine Magnesium 21 nach Entfernung der Abdeckung 4 dem Tiegel entnommen werden kann, z.B. indem man die ganze Vorrichtung auf den Kopf stellt. In gleicher Weise kann durch die Oeffnung auch neues Ausgangsmaterial 2 in den Verdampfungsbereich 111 der Retorte eingebracht werden. Anschliessend muss die Retorte 1 wieder z.B. durch einen Schweiss- oder Lötvorgang mit der Vorkammer 13 vakuumdicht zusammengefügt werden.

Bei den in diesem Beispiel entsprechend Bild 1 verwendeten Heizelemente 5 und 51 handelt es sich um auf konstante Temperaturen geregelte Widerstandsheizelemente, die durch an den für den Destillationsprozess relevanten Stellen der Retorte, also z.B. im von der Schmelze des Ausgangsmaterials kontaktierten Bereich des oberen Bereichs der Retorte zur Einstellung der Temperatur des Verdampfungsprozesses, im unteren Bereich 33 des Kondensationsgefässes 3 sowie der unmittelbaren Umgebung des Sperrorgans 6 zur Kontrolle, ob die Temperatur in diesen Bereichen sich oberhalb des Schmelzpunkts von Magnesium befindet. Anstelle der Widerstandsheizelemente 5 und 51 können natürlich auch zwei Induktionspulen oder eine einzige, der Temperaturverteilung entsprechend gewickelte Induktionsspule treten, welche die Retorte und/oder die in ihr befindlichen Materialien erhitzen.

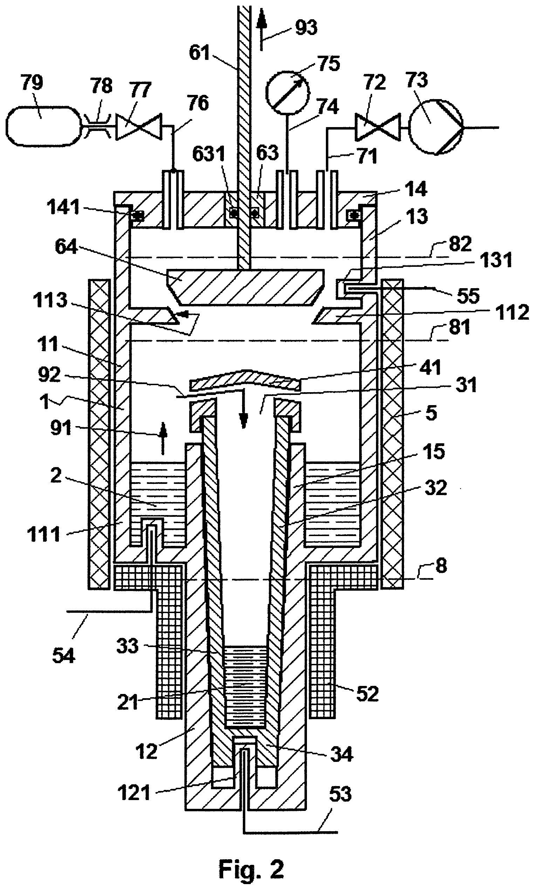

Bild 2 zeigt ein besonders für den rationellen Betrieb unter industriellen Bedingungen geeignetes Beispiel einer erfindungsgemässen Vorrichtung, wobei gleiche Ziffern Teile gleicher Funktion wie in Bild 1 bezeichnen. Dabei ist die Retorte 1 als zentralsymmetrischer Rohrkörper mit einem oberen Bereich 11 mit grösserem Durchmesser sowie einem unteren Bereich 12 mit geringerem Durchmesser aus einer Superlegierung zusammengeschweisst, wobei sich der untere Bereich 12 in einem rohrförmigen Fortsatz 15 bis in den oberen Bereich 11 der Retorte erstreckt. Auf diese Weise befindet sich die Schmelze des Ausgangsmaterials 2 in einem ringförmigen Tiegel, dessen Seitenwände durch den Wandbereich 111 des oberen Bereichs 11 der Retorte 1 und den rohrförmigen Fortsatz 15 gebildet werden, sodass die Schmelze mit der Aussenwand des Kondensationsgefässes nicht in Kontakt kommt.

In diesem Beispiel der erfindungsgemässen Vorrichtung besitzen der Rohrfortsatz 15 und der untere Bereich 12 der Retorte innen eine Innenwand mit durchgehender Konizität, sodass das Kondensationsgefäss 3 in Form eines Tiegels aus hochreinem Graphit, welches eine entsprechende Konizität der äusseren Mantelfläche besitzt, keinen Spalt für das Eindringen kondensierender Magnesiumschmelze zur Verfügung stellt. Im Gegensatz zum Vorrichtungsbeispiel entsprechend Bild 1, wo das Kondensationsgefäss 3 eine zylindrische Innenbohrung besitzt, da der erstarrte Reinmagnesiumblock infolge der grossen Schwindung in der Regel einfach zu entfernen ist, besitzt das Kondensationsgefäss 3 beim vorliegenden Vorrichtungsbeispiel auch eine konische Innenfläche, sodass die Entfernung des hochreinen Magnesiumblocks 21 nach der Erstarrung noch einfacher möglich ist.

Die Oeffnung 31 des Kondensationsgefässes 3 wird durch eine dachförmige Graphitabdeckung 41 mit schräg nach oben führenden radialen Bohrungen für den Eintritt des Magnesiumdampfs entsprechend Pfeil 92 abgedeckt. Die Abdeckung 41 kann auch aufwendiger als im Bild gestaltet werden, etwa indem man auch seitliche Blenden vor die radialen Bohrungen setzt, sodass keine Spritzer der stark kochenden Schmelze des Ausgangsmaterials 2 direkt in das Kondensationsgefäss 3 geschleudert werden können.

Das Sperrorgan ist hier in Form eines konischen Metallstopfens 64 ausgebildet, welcher gegen den konischen Sitz 113 der Zwischenwand 112 dichtet. Dieser Dichtungsvorgang wird noch dadurch unterstützt, dass im Dichtungsspalt zwischen dem Metallstopfen 64 und dem Sitz 113 flüssiges Magnesium kondensiert, welches den Durchgang von Magnesiumdampf verhindert. Die Schubstange 61, mit welcher das Sperrorgan in Richtung des Pfeils 92 geschlossen werden kann, wird durch eine Vakuumdurchführung 63 mit Dichtungsring 631 von aussen betätigt, wobei dies manuell oder automatisch über einen Steuerimpuls erfolgen kann. Anstelle des Dichtungsrings 631 könnte die Schubstange 61 auch z.B. mit einem Metallbalg dichtend durch den Flansch 14 in die Vorkammer 13 eingeführt werden. Der Flansch 14 wird im Beispiel mit einem Dichtungsring 141 gegen die zylindrische Vorkammer 13 gedichtet.

Die Leitungen 71, 74 und 76 führen wie im vorherigen Beispiel zu einer Vakuumpumpe 73, einem Vakuummessgerät 75 und wahlweise zu einer Inertgasquelle, nur dass es sich hier um elektrisch ansteuerbare Ventile 72 und 77 handelt, sodass neben dem Absperrorgan 64 zur Verbindung der Retorte 1 mit der Vorkammer 13 auch die Senkung und die Steigerung des Drucks in Richtung auf einen Solldruckbereich in dem beim vorherigen Beispiel beschriebenen Sinne im Rahmen eines Regelkreises automatisch erfolgen können.

Abweichend vom vorherigen Beispiel wird bei dieser Vorrichtung nur der obere Bereich 11 der Retorte 1 mit einem Heizelement 5, z.B. in Form eines rohrförmigen Widerstandsheizofens beheizt, während der ihr unterer Bereich 12 von einer Isolationsschicht 52 umgeben ist, die so bemessen ist, dass die vom oberen Bereich durch Wärmeleitung durch die Retortenwand 12 und die Wand 32 des Kondensationsgefässes sowie durch die Kondensation des Magnesiumdampfs nach unten gelangende Wärme im Verein mit der Kühlwirkung des unten nicht isolierten Bereichs der Retortenwand 12 die Temperatur der kondensierten hochreinen Magnesiumschmelze im gewünschten Bereich zwischen der Schmelz- und der Siedetemperatur hält. Das Temperaturprofil innerhalb der Retorte 1 kann übrigens durch Verschiebung derselben in vertikaler Richtung gegenüber Ofen und Isolation in gewünschter Weise innerhalb eines gewissen Bereichs geändert werden.

Ueber einen Temperaturmessfühler 53, z.B. ein Mantelthermoelement vom Typ K oder J, welches über eine Ausstülpung der Wand 12 bis in den Fuss des unteren Bereichs 32 des Kondensationsgefässes 3 hineinreicht, kann die Temperatur der hochreinen Magnesiumschmelze 21 kontrolliert und gegebenenfalls so geregelt werden, dass sie nicht unter den Schmelzpunkt des Magnesiums absinkt. Mit dem Mit einem zweiten Temperaturmessfühler 54, z.B. ebenfalls einem Mantelthermoelement, welches über eine Ausstülpung der Wand des Bereichs 111 der Retorte die Temperatur innerhalb der Schmelze des Ausgangsmaterials 2misst, kann der Moment bestimmt werden, in dem der letzte Rest des Ausgangsmaterials verdampft ist. In diesem Moment, wo die Kühlwirkung des Verdampfungsprozesses aussetzt, kommt es nämlich zu einer plötzlichen Erhöhung der Temperatur dieses Thermoelements. Der dritte Temperaturfühler 55 sitzt in einer Ausstülpung des unteren Bereichs der Wand der Vorkammer 13 dicht oberhalb des Sperrorgans 64 und erlaubt die Kontrolle, ob dieses Sperrorgan sich oberhalb der Temperatur des Schmelzpunkts von Magnesium befindet, denn nur dann ist die einwandfreie Funktion dieses Sperrorgans gesichert. Bei Ende einer Ofenreise, d.h. vor Abkühlung der Anlage, sollte das Sperrorgan 64 von der Sitzfläche 113 abgehoben werden, damit es nicht mit dieser verlötet wird.

Im ersten Beispiel einer Vorrichtung wurde eine Variante der Beheizung mit zwei unabhängigen Heizelementen gezeigt, im vorliegenden zweiten Beispiel erfolgt die Beheizung des oberen Retortenbereichs mit einem Heizelement 5, wobei der untere, von der thermischen Isolation umgebene Bereich 12 indirekt durch den oberen Bereich mitbeheizt wird, wobei auch die durch die Kondensation des Magnesiumdampfs eingebrachte Wärme beiträgt. Im Sinne des erfindungsgemässen Verfahrens sind auch Vorrichtungen mit mehreren, in vertikaler Richtung aufeinanderfolgender Oefen möglich, sodass z.B. der obere und der untere Teil der Retorte und zusätzlich auch der Bereich des Sperrorgans 6 jeder mit einem eigenen Heizelement separat auf ihre spezifische Temperatur regelbar sind.

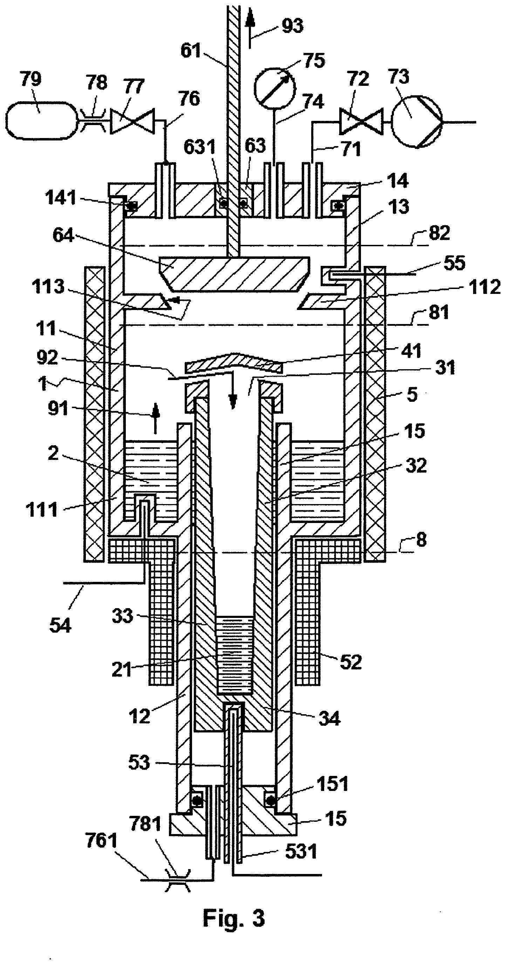

Bild 3 zeigt ein drittes Beispiel einer erfindungsgemässen Vorrichtung, welches der in Bild 2 gezeigten Vorrichtung weitgehend ähnlich ist. Im Unterschied zu dieser dort gezeigten Vorrichtung besitzt das Kondensationsgefäss 3 jedoch beim vorliegenden Beispiel eine zylindrisch Aussenfläche, wodurch ein ringförmiger Spalt zwischen dieser Aussenfläche und der inneren Mantelfläche des unteren Bereichs 12 der Retorte 1 entsteht. Durch Entfernung eines wahlweise wassergekühlten Flansches 15 kann der Tiegel nach unten aus der Retorte herausgezogen werden. Um zu verhindern, dass Magnesiumdampf in diesen Spalt eindringt und in seinem unteren Bereich flüssig, bzw. unterhalb des Tiegelbodens 34 fest kondensiert, besitzt dieser Flansch 15 eine Zuleitung 761 mit einem Strömungsregulierungselement 781, durch welches aus einer Inergasquelle stammendes Gas in den Raum unterhalb des Bodens 34 des Kondensationsgefässes 3 eingeführt werden kann. Die Menge des zugeführten Inertgases wird dabei so bemessen, dass seine Geschwindigkeit im Spalt ausserhalb des Kondensationsgefässes 3 so hoch ist, dass sie die Diffusionsgeschwindigkeit des in Gegenrichtung potentiell migrationsbereiten Magnesiumdampfs übertrifft. Durch diese Zugabe von Inertgas wird zwar der Druckanstieg innerhalb der Retorte beschleunigt, wodurch die Intervalle, innerhalb derer das Sperrorgan 64 zum Zwecke der Druckkontrolle und -regelung geöffnet werden muss, etwas kürzer werden, jedoch ist diese Verkürzung unerheblich, da nur geringe Inertgasmengen zur Freihaltung des Spalts notwendig sind.

In den Bildern nicht gezeigt sind die Regelkreise und -mechanismen, welche zur Konstanthaltung der Temperaturen und des Drucks der Vorrichtungen nötig sind, da ihre Funktionsweise - abgesehen von der für die Durchführung des Verfahrens nötigen Genauigkeit - für die Durchführung des Verfahrens unerheblich ist.

### Legende

- 1: Retorte, allgemein
- 11: oberer Bereich Retorte
- 111: mit Ausgangsmaterial in Kontakt stehender Bereich von 11
- 112: Zwischenwand von 11 und 13
- 113: Konussitz für 64 in 112
- 114: Ausstülpung der Retortenwand als Schutz für Temperaturmessfühler 54
- 12: unterer verjüngter Bereich Retorte
- 121: Ausstülpung der Vorkammerwand als Schutz für Temperaturmessfühler 53
- 13: Vorkammer
- 131: Ausstülpung der Retortenwand als Schutz für Temperaturmessfühler 55
- 14: Vakuumflansch
- 141: Dichtungsring
- 15: Vakuumflansch
- 151: Dichtungsring

- 2: magnesiumhaltige metallische Ausgangsschmelze
- 21: hochreine Magnesiumschmelze

- 3: Kondensationsgefäss, allgemein
- 31: Oeffnung Kondensationstiegel
- 32: obere Zone Kondensatortiegel
- 33: untere Zone Kondensationstiegel

- 4: Abdeckung
- 41: Abdeckung mit seitlichen Oeffnungen

- 5: Heizung Bereich 11
- 51: Heizung Bereich 12
- 52: Isolation Bereich 12
- 53: Temperaturmessfühler Bodenzone Kondensationsgefäss
- 531: Schutzrohr für Temperaturmessfühler
- 54: Temperaturmessfühler Verdampfungszone
- 55: Temperaturmessfühler Bereich Sperrorgan 64
- 6: Sperrorgan
- 61: Schiebestange Sperrorgan
- 62: Dichtungssitz Sperrorgan
- 63: Vakuumdurchführung Schiebestange
- 631: Dichtungsring
- 64: Sperrorgan mit konischem Sitz

- 71: Verbindungsleitung zu Vakuumpumpe
- 72: Sperrorgan zu Vakuumpumpe
- 73: Vakuumpumpe
- 74: Verbindungsleitung zu Vakuummessgerät
- 75: Vakuummessgerät
- 76: Verbindungsleitung zu Sperrorgan
- 761: Verbindungsleitung zu Strömungsregulierung Inertgas
- 77: Sperrorgan
- 78: Strömungsregulierung Inertgas
- 781: Strömungsregulierung Inertgas
- 79: Inertgasquelle

- 8: untere Niveaugrenze Temperaturbereich oberhalb Siedetemperatur
- 81: obere Niveaugrenze Temperaturbereich oberhalb Siedetemperatur
- 82: obere Niveaugrenze Temperaturbereich oberhalb Schmelztemperatur
- 83: Niveaulinie von möglichem Sägeschnitt

- 91: Pfeil, Dampferzeugung
- 92: Pfeil, Dampfeintritt in Kondensationsgefäss
- 93: Pfeil, Heberichtung Sperrorgan 6

## Patentansprüche

1. Verfahren zur Erzeugung von hochreinem Magnesium durch Destillation unter vermindertem Druck, **dadurch gekennzeichnet, dass** ein Ausgangsmaterial in Form einer magnesiumhaltigen Metallschmelze sich mit dem oberen Bereich eines tiegelförmigen Kondensationsgefässes aus einem gegen Magnesium inerten Material mit einer gegen Zutritt verunreinigter refluxierender Magnesiumschmelze durch eine gegen Magnesium inerte Abdeckung geschützten, den Eintritt von Magnesiumdampf gestattenden Oeffnung, im oberen Teil einer vakuumdichten, von aussen durch eines oder mehrere Heizelemente in horizontaler Richtung auf unterschiedliche Temperaturen beheizbaren Retorte aus einem gegen Magnesium weitgehend inerten oder zumindest nicht verdampfungsfähige Verunreinigungen abgebenden Material bei einer Temperatur oberhalb des Schmelzpunkts sowie im unmittelbaren Bereich der magnesiumhaltigen Schmelze und der Oeffnung des tiegelförmigen Kondensationsgefässes oberhalb des Siedepunkts von Magnesium befindet, wobei sich der untere Bereich des tiegelförmigen Kondensationsgefässes in einem sich verjüngenden, seinen unteren Bereich eng umschliessenden Bereich der Retorte, in einem Temperaturgradient zwischen dem Siede- und Schmelzpunkt von Magnesium befindet und dass die Retorte zumindest zeitweise über ein Sperrorgan mit einer Vorkammer in Verbindung gesetzt werden kann, welche ihrerseits über Leitungen und ein Ventil mit einer Vakuumpumpe, über eine weitere Leitung mit einem Vakuummessgerät und über eine dritte Leitung und ein Ventil mit einer Inertgasquelle in Verbindung gesetzt werden kann, wobei der Druck innerhalb der Retorte während des Destillationsprozesses in einem Solldruckbereich gehalten, d.h. einerseits so weit vermindert wird, dass der Siedepunkt des Magnesiums auf eine für das Material der Retorte thermisch tragbare Temperatur abgesenkt und andererseits durch wahlweise Zugabe von Inertgas auf einem Mindestwert gehalten wird, bei dem der Siedepunkt der im unteren Bereich des tiegelartigen Kondensationsgefässes befindlichen Reinmagnesiumschmelze nicht überschritten wird.

2. Verfahren nach Anspruch 1, **dadurch gekennzeichnet, dass** sich das Sperrorgan zum Zwecke des Druckausgleichs zwischen der Retorte und der Vorkammer in Intervallen öffnet, wonach der vom Vakuummessgerät erfasste und von einem Wandler in ein elektrisches Signal umgewandelte Druck nach Vergleich mit einem Solldruckbereich über einen Regelkreis die Retorte entweder über ein elektrisch ansteuerbares Ventil mit der Vakuumpumpe oder über ein anderes elektrisch ansteuerbares Ventil mit einer Inertgasquelle so lange in Verbindung setzt, bis der Solldruckbereich erreicht ist, wobei die Grösse der während der letzten Schliessperiode des Sperrorgans erfolgten Druckänderung wahlweise die Dauer der nächsten Schliessperiode bestimmt.

3. Verfahren nach Anspruch 1 wahlweise in Kombination mit Anspruch 2, **dadurch gekennzeichnet, dass** in den Spalt zwischen der inneren Mantelfläche des unteren Bereichs der Retorte und der äusseren Mantelfläche des unteren Bereichs des tiegelartigen Kondensationsgefässes Inertgas über ein Nadelventil in einer Strömungsmenge eingeleitet wird, welche verhindert, dass Magnesiumdampf und/oder Magnesiumschmelze in diesen Spalt eindringt.

4. Vorrichtung zur Durchführung des Verfahrens nach Anspruch 1 **dadurch gekennzeichnet, dass** ein Ausgangsmaterial in Form einer magnesiumhaltigen Metallschmelze zusammen mit dem oberen Bereich eines tiegelartigen Kondensationsgefässes mit einer oberhalb seiner Oeffnung befindlichen Abdeckung innerhalb des oberen Bereichs einer Retorte angeordnet ist, wobei die sich in ihrem unteren Bereich verjüngende Retorte den unteren Teil des tiegelartigen Kondensationsgefässes eng umschliesst, und dass die Retorte über ein Sperrorgan mit einer Vorkammer in Verbindung steht, welche über eine Leitung und ein Ventil mit einer Vakuumpumpe, über eine zweite Leitung mit einem Vakuummessgerät und über eine dritte Leitung und ein Ventil, wahlweise in Serie mit einer Strömungs- und/oder Druckregulierungsvorrichtung, mit einer Inertgasquelle in Verbindung steht, und dass zumindest ein Teil des oberen Bereichs der Retorte durch zumindest ein aussen um diesen Bereich angeordnetes und auf konstante Temperatur regelbares Heizelement beheizbar ist, während der untere Bereich der Retorte entweder durch zumindest ein aussen um diesen Bereich angeordnetes und auf konstante Temperatur regelbares Heizelement direkt und/oder eine um diesen Bereich angeordnete und gegen Wärmeentzug schützende Isolation indirekt zur Erzielung eines gewünschten Temperaturprofils beheizbar ist.

5. Vorrichtung nach Anspruch 4, **dadurch gekennzeichnet, dass** das bei einer Temperatur oberhalb der Schmelztemperatur befindliche Sperrorgan zwischen der unterhalb befindlichen oberen Stirnseite der Retorte und unterhalb der unteren Stirnseite der Vorkammer angeordnet ist, und dass die Vorkammer durch einen an ihrer oberen Stirnseite angeordneten und wahlweise gekühlten Flansch gegen aussen abgedichtet werden kann , wobei das Sperrorgan durch eine durch den Flansch vakuumdicht nach aussen geführte Stange betätigt und nach Ende des Destillationsprozesses bzw. einer Ofenreise nach erfolgter Abkühlung zusammen mit dem Flansch entfernt werden kann, und dass die lichte Oeffnung des Sperrorgans so gross bemessen ist, dass durch diese Oeffnung sowohl neues magnesiumhaltiges Material in die Verdampfungszone eingebracht wie auch das kondensierte und erstarrte Reinmagnesium nach zeitweiser Entfernung der oberhalb seiner Oeffnung angeordneten Abdeckung aus dem tiegelartigen Kondensationsgefäss entfernt werden kann.

6. Vorrichtung nach Anspruch 4, wahlweise in Kombination mit Anspruch 5, **dadurch gekennzeichnet, dass** die Retorte und das Sperrorgan aus rostfreiem Stahl oder einem warmfesten Stahl oder einer Superlegierung bestehen.

7. Vorrichtung nach Anspruch 4, wahlweise in Kombination mit Anspruch 5 und/oder 6, **dadurch gekennzeichnet, dass** das tiegelartige Kondensationsgefäss und die oberhalb seiner Oeffnung angeordnete Abdeckung aus einem hochreinen Graphit bestehen.

8. Vorrichtung nach Anspruch 4, sowie einem der Ansprüche 5 - 7, einzeln oder in Kombination, **dadurch gekennzeichnet, dass** das tiegelartige Kondensationsgefäss eine sich nach oben konisch öffnende innere Mantelfläche besitzt.

9. Vorrichtung nach Anspruch 4, sowie einem der Ansprüche 5 - 8, einzeln oder in Kombination, **dadurch gekennzeichnet, dass** das Kondensationsgefäss zumindest in seinem unteren Bereich eine sich nach oben öffnende konische äussere Mantelfläche besitzt, welche auf der entsprechend konisch ausgebildeten inneren Mantelfläche des unteren Bereichs der Retorte in dichtender Weise aufsitzt.

10. Vorrichtung nach Anspruch 4, sowie einem der Ansprüche 5 - 8, einzeln oder in Kombination, **dadurch gekennzeichnet, dass** das Kondensationsgefäss zumindest in seinem unteren Bereich eine zylindrische oder sich nach unten öffnende konische Mantelfläche besitzt, welche auf der entsprechend konisch ausgebildeten inneren Mantelfläche des unteren Bereichs der Retorte in weitgehend dichtender Weise aufsitzt und dass an der unteren Stirnseite der Retorte ein wahlweise mit einer Inertgasleitung versehener Flansch angeordnet ist, nach dessen zeitweiser Entfernung das tiegelartige Kondensationsgefäss zwischen zwei Ofenreisen und nach erfolgter Abkühlung nach unten aus der Retorte entfernbar ist.

11. Vorrichtung nach Anspruch 4, sowie einem der Ansprüche 5 - 10, einzeln oder in Kombination, **dadurch gekennzeichnet, dass** das tiegelartige Kondensationsgefäss mit seiner Längsachse entlang der Längsachse der zentralsymmetrischen Retorte angeordnet ist, wobei der im oberen Bereich des Kondensationsgefässes befindliche Teil des tiegelartigen Kondensationsgefässes durch eine ihn eng umgebende und unten dicht mit der Retorte verbundene Trennwand von dem ihn in konzentrischer Weise umgebenden Ausgangsmaterial in Form der magnesiumhaltigen Metallschmelze getrennt ist, wobei diese Trennwand vorzugsweise aus demselben Material wie die Retorte besteht.

## Claims

1. A method for producing ultrapure magnesium by distilling at reduced pressure, **characterized in that** a starting material in the form of a magnesium-containing molten metal is disposed, together with the upper region of a crucible-shaped condensation vessel made of a material inert to magnesium and having an opening that is protected against the entry of contaminated refluxing molten magnesium by a cover inert to magnesium and that permits the entry of magnesium vapor, in the upper part of a vacuum-tight retort that may be heated to different temperatures from the outside in the horizontal direction by one or a plurality of heating elements and that is made of a material largely inert to magnesium or a material that at least does not give off evaporable impurities at a temperature above the melting point and is disposed in the immediate region of the magnesium-containing melt or of the opening of the crucible-shaped condensation vessel above the boiling point of magnesium, wherein the lower region of the crucible-shaped condensation vessel is disposed in a tapering retort that region closely surrounds its lower region, in a temperature gradient between the boiling point and the melting point of magnesium, and **in that** the retort may be at least temporarily linked, using a blocking element, to a chamber that itself may be linked via lines and a valve to a vacuum pump, via a further line to a vacuum gauge, and via a third line and a valve to an inert gas source, wherein the pressure inside the retort is maintained in a target pressure range during the distillation process, i.e., on the one hand is lowered until the boiling point of the magnesium is reduced to a temperature thermally acceptable for the material of the retort and on the other hand is maintained at a minimum value by the selective addition of inert gas, in which the boiling point of the pure molten magnesium disposed in the lower region of the crucible-shaped condensation vessel is not exceeded.

2. The method according to claim 1, **characterized in that**, for the purpose of pressure equalization, the blocking element opens between the retort and the chamber at intervals, whereupon the pressure detected by the vacuum gauge and converted by a converter to an electrical signal, after being compared to a target pressure range, using a control circuit links the retort either to the vacuum pump via an electrically controllable valve or to an inert gas source via a further electrically controllable valve until the target pressure range has been attained, wherein the magnitude of the change in pressure that occurs during the last closure period of the blocking element optionally determines the duration of the next closure period.

3. The method according to claim 1, optionally in combination with claim 2, **characterized in that** inert gas is introduced via needle valve in a flow quantity into the gap between the inner lateral surface of the lower region of the retort and the outer lateral surface of the lower region of the crucible-shaped condensation vessel and prevents magnesium vapor and/or molten magnesium from penetrating into this gap.

4. A device for executing the method according to claim 1, **characterized in that** a starting material in the form of a magnesium-containing molten metal, together with the upper region of a crucible-shaped condensation vessel having a cover disposed above its opening is arranged inside the upper region of a retort, wherein the retort, which tapers in its lower region, closely surrounds the lower region of the crucible-shaped condensation vessel, and **in that** the retort is linked via a blocking element to a chamber that is linked via a line and a valve to a vacuum pump, via a second line to a vacuum gauge, and via third line and a valve, optionally in series with a flow and/or pressure regulating device, to an inert gas source, and **in that** at least one part of the upper region of the retort may be heated by at least one heating element that is arranged outside of and about this region and that may be regulated at a constant temperature, while the lower region of the retort may either be heated directly using at least one heating element that is arranged outside of and about this region and that may be regulated at a constant temperature and/or indirectly by insulation that is arranged about this region and that protects against heat loss to attain a desired temperature profile.

5. The device according to claim 4, **characterized in that** the blocking element at a temperature above the melting temperature is arranged between the upper end face of the retort disposed below the chamber and below the lower end face of the chamber, and **in that** the chamber may be sealed against the outside by a flange that is arranged on its upper end face and that is optionally cooled, wherein the blocking element is actuated by a rod guided vacuum-tight outward through the flange and after the end of the distillation process or a furnace cycle, following cooling, may be removed together with the flange, and **in that** the clear opening of the blocking element is dimensioned such that both new magnesium-containing material may be added to the evaporation zone through this opening and the condensed and hardened pure magnesium may be removed from the crucible-shaped condensation vessel through this opening following temporary removal of the cover arranged above its opening.

6. The device according to claim 4, optionally in combination with claim 5, **characterized in that** the retort and the blocking element comprise stainless steel or a heat-resistant steel or a superalloy.

7. The device according to claim 4, optionally in combination with claim 5 and/or 6, **characterized in that** the crucible-shaped condensation vessel and the cover arranged above its opening comprise an ultrapure graphite.

8. The device according to claim 4 and any of claims 5 - 7, individually or in combination, **characterized in that** the crucible-shaped condensation vessel has an inner lateral surface that opens conically upward.

9. The device according to claim 4 and any of claims 5 - 8, individually or in combination, **characterized in that** the condensation vessel has a conical outer lateral surface that opens upward, at least in its lower region, and that is seated in a sealing manner on the correspondingly conically embodied inner lateral surface of the lower region of the retort.

10. The device according to claim 4 and any of claims 5 - 8, individually or in combination, **characterized in that** the condensation vessel has a cylindrical or conical downwardly opening lateral surface, at least in its lower region, that is seated in a largely sealing manner on the correspondingly conically embodied inner lateral surface of the lower region of the retort and **in that** arranged on the lower end face of the retort is a flange, optionally provided with an inert gas line, and after the flange is temporarily removed the crucible-shaped condensation vessel may be removed downward from the retort between two furnace cycles and following cooling.

11. The device according to claim 4 and any of claims 5 - 10, individually or in combination, **characterized in that** the longitudinal axis of the crucible-shaped condensation vessel is arranged along the longitudinal axis of the centrosymmetric retort, wherein the part of the crucible-shaped condensation vessel disposed in the upper region of the condensation vessel is separated from the starting material, in the form of magnesium-containing molten metal, surrounding it concentrically by a separating wall that closely surrounds it and that is sealingly joined at the bottom to the retort, wherein this separating wall preferably comprises the same material as the retort.

## Revendications

1. Procédé de préparation de magnésium de grande pureté par une distillation sous pression réduite, **caractérisé en ce qu'**un matériau de départ se trouve sous forme d'un métal en fusion contenant du magnésium avec la zone supérieure d'un récipient de condensation en forme de creuset à base d'un matériau inerte vis-à-vis du magnésium, protégé avec un couvercle inerte vis-à-vis du magnésium contre la pénétration de magnésium fondu sous reflux contenant des impuretés, l'entrée de vapeurs de magnésium par l'ouverture, dans la partie supérieure d'une cornue étanche au vide, pouvant être chauffée à différentes températures de l'extérieur par un ou plusieurs éléments de chauffage dans la direction horizontale, à base d'un matériau largement inerte vis-à-vis du magnésium ou au moins n'émettant pas d'impuretés susceptibles de s'évaporer à une température au-dessus du point de fusion, ainsi que dans la zone immédiate du produit en fusion contenant du magnésium et dans l'ouverture du récipient de condensation en forme de creuset au-dessus du point d'ébullition du magnésium, où la zone inférieure du récipient de condensation en forme de creuset se trouve dans une zone de la cornue allant en s'effilant, entourant de près la zone inférieure de la cornue, dans un gradient de température entre le point d'ébullition et le point de fusion du magnésium et que la cornue peut être placée au moins par moments par le biais d'un organe de barrage en communication avec une antichambre, laquelle peut être, de son côté, mise en communication avec une pompe à vide par le biais de conduites et d'une soupape, peut être mise en communication par le biais d'une nouvelle conduite avec un appareil de mesure du vide et par une troisième conduite et une soupape avec une source de gaz inerte, où la pression à l'intérieur de la cornue pendant le processus de distillation est maintenue dans une zone de pression souhaitée, c'est-à-dire, est d'une part diminuée de telle façon que le point d'ébullition du magnésium est rabaissé à une température supportable thermiquement pour la matière de la cornue et d'autre part, est maintenue à une valeur minimale par une addition choisie de gaz inerte, où le point d'ébullition du magnésium pur en fusion se trouvant dans la partie inférieure du récipient de condensation en forme de creuset n'est pas dépassé.

2. Procédé selon la revendication 1, **caractérisé en ce que** l'organe de barrage s'ouvre par intervalles pour la mise à l'équilibre de la pression entre la cornue et l'antichambre, après quoi, la pression détectée par l'appareil de mesure du vide et transformée en un signal électrique par un convertisseur après la comparaison avec une plage de pression souhaitée, se met en communication par le biais d'un circuit de régulation de la cornue soit par une soupape pouvant être mise en route électriquement avec la pompe à vide soit par une autre soupape pouvant être mise en route électriquement avec une source de gaz inerte aussi longtemps jusqu'à ce que la plage de pression souhaitée soit atteinte, où l'amplitude de la modification de la pression produite pendant la dernière période de fermeture de l'organe de barrage détermine éventuellement la durée de la prochaine période de fermeture.

3. Procédé selon la revendication 1, éventuellement en combinaison avec la revendication 2, **caractérisé en ce que** dans la fente entre la surface d'enveloppe intérieure de la zone inférieure de la cornue et la surface d'enveloppe extérieure de la zone inférieure du récipient de condensation en forme de creuset, on injecte un gaz inerte par le biais d'une soupape à pointeau dans une quantité telle que celle-ci empêche que de la vapeur de magnésium et/ou du magnésium en fusion ne pénètre dans cette fente.

4. Dispositif pour l'exécution du procédé selon la revendication 1, **caractérisé en ce qu'**un matériau de départ sous la forme d'un métal en fusion contenant du magnésium est disposé, conjointement avec la zone supérieure d'un récipient de condensation de type creuset avec un couvercle se trouvant au-dessus de son ouverture à l'intérieur de la zone supérieure d'une cornue, où la cornue s'effilant dans sa zone inférieure entoure de près la partie inférieure du récipient de condensation de type creuset et que la cornue est en communication avec une antichambre par le biais d'un organe de barrage, laquelle chambre est en communication par le biais d'une conduite et d'une soupape avec une pompe à vide, et est en communication avec un appareil de mesure de la pression par le biais d'une deuxième conduite, et par le biais d'une troisième conduite, et une soupape, éventuellement en série avec un dispositif d'écoulement et/ou un dispositif de régulation de la pression, avec une source de gaz inerte et qu'au moins une partie de la zone supérieure de la cornue peut être chauffée par au moins un élément chauffant réglable à une température constante et disposé à l'extérieur autour de cette zone, pendant que la zone inférieure de la cornue peut être soit chauffée directement par au moins un élément chauffant réglable à une température constante et disposé à l'extérieur autour de cette zone et/soit chauffée indirectement par une isolation protégeant contre l'évacuation de la chaleur et disposée autour de cette zone pour avoir le profil de température souhaité.

5. Dispositif selon la revendication 4, **caractérisé en ce que**, lorsque l'organe de barrage se trouvant à une température au-dessus de la température de fusion est disposé entre le côté avant supérieur de la cornue se trouvant en dessous et en-dessous du côté avant inférieur de l'antichambre et que l'antichambre peut être rendue étanche vis-à-vis de l'extérieur par une bride disposée sur son côté avant supérieur et éventuellement refroidie, où l'organe de barrage est actionné de manière étanche au vide vers l'extérieur par une tige guidée par la bride et peut être enlevé à la fin du processus de distillation, respectivement après un parcours dans le four après un refroidissement réussi ensemble avec la bride, et que la petite ouverture de l'organe de barrage est dimensionnée de telle façon que de la nouvelle matière contenant du magnésium peut également être entrée dans la zone d'évaporation par cette ouverture, ainsi que du magnésium pur condensé et figé après le retrait progressif du couvercle disposé au-dessus de son ouverture à partir du récipient de condensation de type creuset.

6. Dispositif selon la revendication 4, éventuellement en combinaison avec la revendication 5, **caractérisé en ce que** la cornue et l'organe de barrage sont constitués d'acier inoxydable, ou d'un acier réfractaire, ou d'un super alliage.

7. Dispositif selon la revendication 4, éventuellement en combinaison avec la revendication 5 et/ou 6, **caractérisé en ce que** le récipient de condensation de type creuset et le couvercle disposé au-dessus de son ouverture sont constitués de graphite de grande pureté.

8. Dispositif selon la revendication 4, ainsi que selon l'une des revendications 5 à 7, seule ou en combinaison, **caractérisé en ce que** le récipient de condensation de type creuset possède une surface d'enveloppe intérieure s'ouvrant de manière conique vers le haut.

9. Dispositif selon la revendication 4, ainsi que selon l'une des revendications 5 à 8, seule ou en combinaison, **caractérisé en ce que** le récipient de condensation de type creuset possède au moins au niveau de sa zone inférieure une surface d'enveloppe extérieure conique s'ouvrant vers le haut, laquelle repose de manière étanche sur la surface d'enveloppe intérieure conçue de manière conique correspondante de la zone inférieure de la cornue.

10. Dispositif selon la revendication 4, ainsi que selon l'une des revendications 5 à 8, seule ou en combinaison, **caractérisé en ce que** le récipient de condensation possède au moins dans sa zone inférieure une surface d'enveloppe cylindrique ou conique s'ouvrant vers le bas, laquelle repose de manière largement étanche sur la surface d'enveloppe intérieure conçue de manière conique correspondante de la zone inférieure de la cornue et que sur le côté avant inférieur de la cornue il y a éventuellement une bride munie d'une conduite de gaz inerte, après le retrait intermittent de laquelle le récipient de condensation de type creuset peut être retiré vers le bas hors de la cornue entre deux tours dans le four ou après un refroidissement réussi.

11. Dispositif selon la revendication 4, ainsi que selon l'une des revendications 5 à 10, seule ou en combinaison, **caractérisé en ce que** le récipient de condensation de type creuset est disposé avec son axe longitudinal le long de l'axe longitudinal d'une cornue à symétrie centrale, où la partie du récipient de condensation de type creuset se trouvant dans la zone supérieure du récipient de condensation reliée par une cloison entourant de près celui-ci et étanche en bas avec la cornue est séparée du matériau de départ l'entourant de manière concentrique sous la forme du métal fondu contenant du magnésium, où cette cloison est constituée de préférence du même matériau que la cornue.
